# EUROPÄISCHE PATENTSCHRIFT

(11) **EP 0 799 990 B1**
(45) Veröffentlichungstag und Bekanntmachung des Hinweises auf die Patenterteilung: **06.11.2002**
(21) Anmeldenummer: 97104607.3
(22) Anmeldetag: 18.03.1997
(51) Int. Cl.: F02M 37/10, B60K 15/06, F02M 37/02

(54) **Kraftstoffbehälter für Fahrzeuge**
Motor vehicle fuel tank
Réservoir de carburant de véhicules

(30) Priorität: 06.04.1996 DE 19613893
(43) Veröffentlichungstag der Anmeldung: 08.10.1997
(73) Patentinhaber: Bayerische Motoren Werke Aktiengesellschaft, 80788 München (DE)
(72) Erfinder: Gratza, Peter, 80995 München (DE)

(56) Entgegenhaltungen:
- DE-A- 4 031 434
- DE-A- 4 426 035
- FR-A- 2 636 017

## Beschreibung

Die Erfindung bezieht sich auf einen Kraftstoffbehälter für Kraftfahrzeuge nach dem Oberbegriff des Patentanspruches 1.

Bei einem bekannten derartigen Kraftstoffbehälter (DE 40 31 434 A1) ist in dem hochgezogenen Bereich des Satteltankes ein Stützteil befestigt, in das eine Reihe von Tragteilen für eine Kraftstoff-Förderpumpe, eine Saugstrahlpumpe, eine Umfüll-Leitung und eine als Hebelgeber ausgebildete Füllstandsmeßeinheit gesteckt werden können. Die eben erwähnten Einheiten erstrecken sich von ihrem Einsteckende jeweils relativ weit in die eine bzw. in die andere Behälterkammer. Das genaue Positionieren dieser Einheiten, insbesondere relativ zum Tankboden, ist einerseits wegen der gewählten Steckverbindungen, aber auch wegen des großen Abstandes von der Befestigungsstelle zur erwünschten Position des jeweiligen Teils, relativ schwierig. Die Vielzahl der Teile bedeuten einen erhöhten Kosten- und Montageaufwand. Die Teile sind bei der Herstellung toleranzempfindlich und können sich auch, etwa während der Montage, verbiegen, was zu Nachteilen im praktischen Betrieb, etwa einer ungenauen Anzeige des Füllstandes oder auch einer unvollständigen Absaugung von Kraftstoff, führen kann.

Es ist weiterhin bekannt (DE 41 21 320 C2), eine Saugstrahlpumpe und auch eine Füllstandsmeßeinheit an einem Deckelflansch zu befestigen, der mit einer entsprechenden Öffnung an der Oberseite des Tank verschraubt wird. Auch bei dieser Bauart ist es schwierig, die Teile positionsgenau zu montieren, die Teile in der richtigen Position abzustützen und Verbiegungen von Gestängeteilen zu vermeiden.

Der Erfindung liegt die Aufgabe zugrunde, einen Kraftstoffbehälter der vorausgesetzten Bauart zu schaffen, der mit weniger, einfacher zu montierenden Bauteilen eine genauere Positionierung der in den Tank einzubauenden Teile und damit auch eine größere Funktionssicherheit gewährleistet.

Diese Aufgabe wird erfindungsgemäß durch die im Patentanspruch 1 angegebenen Maßnahmen gelöst. Weitere vorteilhafte Einzelheiten der Erfindung sind Gegenstand von Unteransprüchen.

Die feste Anordnung des Gehäuses der Saugstrahlpumpe am Tankboden stellt eine bodennahe Position der Saugstrahlpumpe auch dann sicher, wenn beispielsweise die Behälterwandungen sich in einem gewissen Maß verformen. Durch die Anordnung der Füllstandsmeßeinheit an dem in seiner Lage genau fixierten Gehäuse der Saugstrahlpumpe ist auch die Füllstandsmeßeinheit sehr genau gegenüber dem Behälterboden positioniert.

Die Befestigung des Gehäuses der Saugstrahlpumpe mit dem Behälterboden kann über eine Steck- oder Clipsverbindung erfolgen. Dadurch kann das Gehäuse unter Umständen auch für Reparaturzwecke vom Behälterboden gelöst werden. Es ist aber auch möglich, das Gehäuse der Saugstrahlpumpe mit dem Behälterboden zu verschweißen, da die Saugstrahlpumpen praktisch keinem Verschleiß unterliegen und über die Fahrzeuglebensdauer in der Regel nicht gewechselt werden.

In gleicher Weise kann die Füllstandsmeßeinheit lösbar, beispielsweise über eine Clipsverbindung an dem Gehäuse der Saugstrahlpumpe angeordnet sein. Es ist aber auch möglich, dieses Gehäuse und ein entsprechendes Tragteil der Füllstandsmeßeinheit, insbesondere wenn beide Teile aus Kunststoff bestehen, miteinander zu verschweißen oder unter Umständen auch aus einem Stück herzustellen.

Eine besonders unempfindliche Bauweise, die Verbiegungen während der Montage entgegenwirkt, ist erreichbar, wenn die Füllstandsmeßeinheit als Hebelgeber ausgebildet ist und dabei der schwenkbare Schwimmerarm aus Kunststoff gefertigt ist. Ein solcher Schwimmerarm ist nicht nur vergleichsweise leicht, er ist auch unempfindlich gegenüber kurzzeitigen geringeren Verformungen. Auch wenn anstelle eines Hebelgebers ein Tauchrohrgeber, ein elektrothermischer Geber oder anderweitige berührungslose Geber eingesetzt werden, ist es von Vorteil, das jeweilige Tragteil dieser Geber an dem Gehäuse der Saugstrahlpumpe zu befestigen.

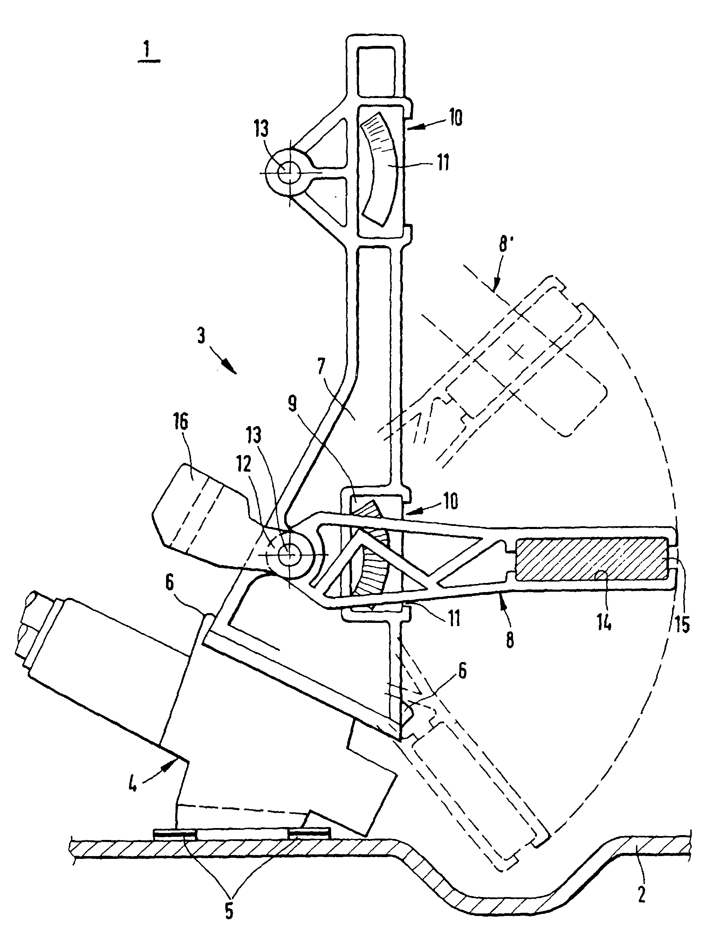

Die Erfindung und weitere vorteilhafte Einzelheiten der Erfindung sind im folgenden anhand eines in der Zeichnung dargestellten Ausführungsbeispiels näher erläutert. Die einzige Figur zeigt den Schnitt durch einen Bodenabschnitt eines Kunststoff-Kraftstoffbehälters, an dem das Gehäuse einer Saugstrahlpumpe befestigt ist mit der an dem Gehäuse angeordneten Füllstandsmeßeinheit.

Der Kraftstoffbehälter 1 ist lediglich mit einem Abschnitt seines Behälterbodens 2 dargestellt und weist eine Füllstandsmeßeinheit 3 und eine in einem Gehäuse 4 ausgebildete Saugstrahlpumpe auf, die mit ihren Einzelheiten nicht gesondert erläutert wird. Die Saugstrahlpumpe dient zum Fördern von Kraftstoff aus einer Behälterkammer, der der Behälterboden 2 zugeordnet ist, in eine andere Behälterkammer des Kraftstofftanks oder in einen Schwalltopf.

Das Gehäuse 4 der Saugstrahlpumpe ist am Behälterboden 2 befestigt und trägt ferner die Füllstandsmeßeinheit 3. Das Gehäuse 4 ist über die angedeutete Steckverbindung 5 mit dem Behälterboden 2 verbunden. Es könnte aber auch eine Clipsverbindung verwendet werden, um das Gehäuse im Bedarfsfall vom Behälterboden lösen zu können.

Der Kraftstoffbehälter 2 und das Gehäuse 4 der Saugstrahlpumpe bestehen aus Kunststoff. Dabei kann dann vorzugsweise das Gehäuse 4 mit dem Behälterboden 2 auch verschweißt sein.

Die Füllstandsmeßeinheit 3 kann auch lösbar, beispielsweise über eine Clipsverbindung 6 an dem Gehäuse 4 der Saugstrahlpumpe angeordnet sein. Sind das Gehäuse 4 der Saugstrahlpumpe und das Tragteil 7 der Füllstandsmeßeinheit aus Kunststoff gefertigt, so können auch diese beiden Teile miteinander verschweißt sein. Es ist aber weiterhin auch möglich, das Gehäuse 4 der Saugstrahlpumpe und das Tragteil 7 der Füllstandsmeßeinheit 3 aus einem einzigen Teil zu fertigen. In allen Fällen wird eine sehr lagegenaue Positionierung der Saugstrahlpumpe und auch der Füllstandsmeßeinheit im Kraftstoffbehälter mit einem vergleichsweise geringen Bauaufwand bei gleichzeitig einfacher Montage erreicht. Die aus dem Gehäuse 4 und der Füllstandsmeßeinheit 3 bestehende Baugruppe kann durch eine entsprechende Öffnung auf der Oberseite des Behälters in den Behälter eingeführt und mit dessen Boden verbunden werden, worauf dann die Öffnung auf der Oberseite des Behälters mit einem Deckel verschweißt wird.

Bei dem in der Zeichnung dargestellten Ausführungsbeispiel ist die Füllstandsmeßeinheit 3 als Hebelgeber ausgebildet, wobei der schwenkbare Schwimmerarm 8 aus Kunststoff gefertigt ist. Bei dem bevorzugten Ausführungsbeispiel ist am Tragteil 7 eine mit Ausnehmungen 9 versehene Tasche 10 ausgebildet, in die ein Widerstandsplättchen 11 der Meß-Sensorik eingesetzt ist. Die Tasche 10 kann mit geeigneten Randvorsprüngen versehen sein, die einerseits das Widerstandsplättchen zuverlässig halten, dennoch aber seine einfache Montage durch Einstecken erlauben. Die Ausnehmung 9 dient zum Durchgriff von Schleifkontakten, die bei dem dargestellten Ausführungsbeispiel am Schwimmerarm 8 angeordnet sind. Umgekehrt könnte das Widerstandsplättchen auch am Schwimmerarm und die Schleif-Kontakte könnten am Tragteil 7 vorgesehen werden.

Bei dem dargestellten Ausführungsbeispiel sind die Lageraugen 12 am Schwimmerarm 8 und die zugeordneten Lagerzapfen 13 am Tragteil 7 angespritzt. Der Schwimmerarm ist zumindest in dem an die Lageraugen 12 benachbarten Bereich in einer zur Zeichenebene parallelen Ebene geteilt und kann so weit aufgeweitet werden, daß die Lageraugen 12 über die Lagerzapfen 13 geschoben werden können. Selbstverständlich wäre auch die umgekehrte Bauweise mit den Zapfen am Schwimmerarm und entsprechenden Lageraufnahmen am Tragteil möglich.

Am freien Ende des Schwimmerarmes 8 ist eine Tasche 14 zum Einschieben und Einrasten des Schwimmers 15 vorgesehen. Die sonst häufig übliche Bohrung zum Lagern eines Schwimmers an einem abgewinkelten Drahtende des Schwimmerarms und die zur Festlegung erforderliche Rastscheibe werden eingespart. Trotzdem ist eine einfache und sichere Montage und auch eine gute Anzeigegenauigkeit möglich.

Obwohl durch die Werkstoffpaarung Kunststoff/Kunststoff bei den Lageraugen 12 und den Lagerzapfen 13 und durch das geringe Gewicht des aus Kunststoff bestehenden Schwimmerarms 8 schon eine besondere Leichtgängigkeit des Hebelgebers erreichbar ist, kann diese noch erhöht werden, wenn der Schwimmerarm 8 an seinem dem Schwimmer 15 abgewandten Ende mit einem Gegengewicht 16 versehen ist. Das Gegengewicht 16 kann angeclipst sein oder auch, wie aus der Zeichnung entnehmbar, einstückig angespritzt werden.

Wie der Zeichnung schließlich noch zu entnehmen ist, kann die als Hebelgeber ausgebildete Füllstandsmeßeinheit 3 außer dem bisher beschriebenen Schwimmerarm 8 noch den lediglich in strichlierten Linien angedeuteten Schwimmerarm 8' aufweisen, wobei beide Schwimmerarme übereinander angeordnet sind. Zur Lagerung dieses zweiten Schwimmerarmes 8' weist das Tragteil 7 an seinem oberen Endbereich ebenfalls Lagerzapfen 13 und eine Tasche 10 zur Aufnahme eines Widerstandsplättchens 11 auf.

## Patentansprüche

1. Kraftstoffbehälter für Kraftfahrzeuge, mit wenigstens einer Füllstandsmeßeinheit (3) und einer in einem Gehäuse (4) ausgebildeten Saugstrahlpumpe, die im Bereich des Behälterbodens (2) angeordnet ist und zum Fördern des Kraftstoffs aus einer Behälterkammer in eine andere Behälterkammer dient,
**dadurch gekennzeichnet, daß** das Gehäuse (4) der Saugstrahlpumpe am Behälterboden (2) befestigt ist und ferner die Füllstandsmeßeinheit (3) trägt.

2. Kraftstoffbehälter nach Anspruch 1,
**dadurch gekennzeichnet, daß** das Gehäuse (4) über eine Steckverbindung (5) oder Clipsverbindung mit dem Behälterboden (2) verbunden ist.

3. Kraftstoffbehälter nach Anspruch 1, wobei sowohl der Kraftstoffbehälter als auch das Gehäuse der Saugstrahlpumpe aus Kunststoff bestehen,
**dadurch gekennzeichnet, daß** das Gehäuse (4) mit dem Behälterboden (2) verschweißt ist.

4. Kraftstoffbehälter nach Anspruch 1,
**dadurch gekennzeichnet, daß** die Füllstandsmeßeinheit (3) lösbar, beispielsweise über eine Clipsverbindung (6), an dem Gehäuse (4) der Saugstrahlpumpe angeordnet ist.

5. Kraftstoffbehälter nach Anspruch 1, bei dem das Gehäuse der Saugstrahlpumpe aus Kunststoff besteht,
**dadurch gekennzeichnet, daß** das Tragteil (7) der Füllstandsmeßeinheit (3) aus Kunststoff besteht und mit dem Gehäuse (4) der Saugstrahlpumpe verschweißt ist.

6. Kraftstoffbehälter nach Anspruch 1,
**dadurch gekennzeichnet, daß** das Gehäuse (4) der Saugstrahlpumpe und das Tragteil (7) der Füllstandsmeßeinheit (3) aus einem Teil bestehen.

7. Kraftstoffbehälter nach Anspruch 1,
**dadurch gekennzeichnet, daß** die Füllstandsmeßeinheit (3) als Hebelgeber ausgebildet ist.

8. Kraftstoffbehälter nach den Ansprüchen 5 und 7,
**dadurch gekennzeichnet, daß** entweder am Tragteil (7) oder am Schwimmerarm eine mit Ausnehmungen (9) für den Durchgriff eines Schleifelementes versehene Tasche (10) ausgebildet ist, in die ein Widerstandsplättchen (11) oder dergleichen eingesetzt ist.

9. Kraftstoffbehälter nach Anspruch 8,
**dadurch gekennzeichnet, daß** zur Festlegung des Widerstandsplättchens (11) eine Rastverbindung vorgesehen ist.

10. Kraftstoffbehälter nach Anspruch 5 oder 7,
**dadurch gekennzeichnet, daß** die Lageraugen (12) und/oder die Lagerzapfen (13) am Tragteil bzw. am Schwimmerarm (8) angespritzt sind.

11. Kraftstoffbehälter nach Anspruch 7,
**dadurch gekennzeichnet, daß** am freien Ende des Schwimmerarmes (8) eine Tasche (14) zum Einrasten des Schwimmers (15) vorgesehen ist.

12. Kraftstoffbehälter nach Anspruch 7,
**dadurch gekennzeichnet, daß** der Schwimmerarm (8) an seinem dem Schwimmer (15) abgewandten Ende mit einem Gegengewicht (16) versehen ist.

13. Kraftstoffbehälter nach Anspruch 12,
**dadurch gekennzeichnet, daß** das Gegengewicht (16) an den Schwimmerarm (8) angespritzt ist.

14. Kraftstoffbehälter nach Anspruch 7,
**dadurch gekennzeichnet, daß** der Hebelgeber zwei Schwimmerarme (8, 8') aufweist, die übereinander angeordnet sind.

## Claims

1. A fuel tank for motor vehicles comprising at least one level meter (3) and a sucking jet pump in a casing (4) and disposed near the tank bottom (2) and adapted to deliver fuel from a compartment of the tank to another compartment thereof,
**characterised in that** the casing (4) of the sucking jet pump is fastened to the tank bottom (2) and also holds the level sensor (3).

2. A fuel tank according to claim 1, **characterised in that** the casing (4) is connected to the tank bottom (2) by a plug-in connection (5) or a clip-on connection.

3. A fuel tank according to claim 1, wherein both the tank and the pump casing are of plastics material, **characterised in that** the casing (4) is welded to the tank bottom (2).

4. A fuel tank according to claim 1, **characterised in that** the level meter (3) is secured to the pump casing (4) in releasable manner, for example by a clip-on connection (6).

5. A fuel tank according to claim 1, wherein the pump casing is of plastics material,
**characterised in that** the supporting structure (7) of the level meter (3) is of plastics material and is welded to the pump casing (4).

6. A fuel tank according to claim 1, **characterised in that** the pump casing (4) and the structure (7) supporting the level meter (3) are in one piece.

7. A fuel tank according to claim 1, **characterised in that** the level meter (3) is a lever indicator.

8. A fuel tank according to claims 5 and 7, **characterised in that** a pocket with recesses (9) through which a loop element extends is formed on the supporting structure (7) or on the float arm, and a resistance plate (11) or the like is inserted into the pocket.

9. A fuel tank according to claim 8, **characterised in that** the resistance plate (11) is secured by a snap-in connection.

10. A fuel tank according to claim 5 or 7, **characterised in that** the bearing eyelets (12) and/or the bearing pins (13) are injection-moulded on the supporting structure or on the float arm (8).

11. A fuel tank according to claim 7, **characterised in that** a pocket for engaging the float is provided on the free end of the float arm (8).

12. A fuel tank according to claim 7, **characterised in that** the float arm (8) has a counterweight (16) at its end remote from the float (15).

13. A fuel tank according to claim 12, **characterised in that** the counterweight (16) is injection-moulded on the float arm (8).

14. A fuel tank according to claim 7, **characterised in that** the lever indicator has two float arms (8, 8') disposed one above the other.

## Revendications

1. Réservoir de carburant de véhicules automobiles comportant au moins une unité de mesure de niveau de remplissage (3) et une pompe aspirante à jet réalisée dans un bottier (4), la pompe étant prévue au niveau du fond (2) du réservoir pour transférer du carburant d'une chambre du réservoir dans une autre chambre de celui-ci,
**caractérisé en ce que**
le boîtier (4) de la pompe aspirante à jet est fixé au fond (2) du réservoir et porte en outre l'unité de mesure de niveau de remplissage (3).

2. Réservoir de carburant selon la revendication 1,
**caractérisé en ce que**
le boîtier (4) est relié par une liaison par enfichage (5) ou une liaison par enclipsage au fond (2) du réservoir.

3. Réservoir de carburant selon la revendication 1, selon lequel à la fois le réservoir de carburant et le boîtier de la pompe aspirante à jet sont en matière plastique,
**caractérisé en ce que**
le boîtier (4) est soudé au fond (2) du réservoir.

4. Réservoir de carburant selon la revendication 1,
**caractérisé en ce que**
l'unité de mesure de niveau de remplissage (3) est montée de manière amovible par exemple par une liaison par enclipsage (6) au boîtier (4) de la pompe aspirante à jet.

5. Réservoir de carburant selon la revendication 1, dont le boîtier de la pompe aspirante à jet est en matière plastique,
**caractérisé en ce que**
la pièce de support (7) de l'unité de mesure de niveau de remplissage (3) est en matière plastique et est soudée au boîtier (4) de la pompe aspirante à jet.

6. Réservoir de carburant selon la revendication 1,
**caractérisé en ce que**
le boîtier (4) de la pompe aspirante à jet et la partie de support (7) de l'unité de mesure de niveau de remplissage (3) sont en une seule pièce.

7. Réservoir de carburant selon la revendication 1,
**caractérisé en ce que**
l'unité de mesure de niveau de remplissage (3) est réalisée comme capteur à levier.

8. Réservoir de carburant selon les revendications 5 et 7,
**caractérisé en ce que**
la partie de support (7) ou le bras de flotteur comporte une poche (10) munie de cavités (9) pour le passage d'un élément de frottement et recevant une plaquette résistante (11) ou un moyen analogue.

9. Réservoir de carburant selon la revendication 8,
**caractérisé par**
une liaison par encliquetage pour fixer la plaquette résistante (11).

10. Réservoir de carburant selon l'une quelconque des revendications 5 ou 7,
**caractérisé en ce que**
les oeillets de palier (12) et/ou les tourillons de palier (13) sont injectés sur la pièce de support ou le bras de flotteur (8).

11. Réservoir de carburant selon la revendication 7,
**caractérisé en ce qu'**
une poche (14) pour l'accrochage du flotteur (15) est prévue à l'extrémité libre du bras de flotteur (8).

12. Réservoir de carburant selon la revendication 7,
**caractérisé en ce qu'**
à son extrémité opposée au flotteur Il 5), le bras de flotteur (8) est muni d'un contre-poids (16).

13. Réservoir de carburant selon la revendication 12,
**caractérisé en ce que**
le contre-poids (16) est injecté sur le bras de flotteur (8).

14. Réservoir de carburant selon la revendication 7,
**caractérisé en ce que**
le capteur à levier comporte deux bras de flotteur (8, 8') placés l'un au-dessus de l'autre.
